# EUROPÄISCHE PATENTSCHRIFT

(11) **EP 1 977 879 B1**
(45) Veröffentlichungstag und Bekanntmachung des Hinweises auf die Patenterteilung: **10.06.2009**
(21) Anmeldenummer: 07006913.3
(22) Anmeldetag: 03.04.2007
(51) Int. Cl.: B29C 53/66, B29C 53/80

(54) **Vorrichtung und Verfahren zum Aufwickeln eines Faserstranges**
Device and method for coiling a fibre strand
Dispositif et procédé destinés à l'embobinage d'une mèche de fibres

(43) Veröffentlichungstag der Anmeldung: 08.10.2008
(73) Patentinhaber: EHA Spezialmaschinenbau GmbH, 35239 Steffenberg (DE)
(72) Erfinder: Neubert, Mike, 35232 Dautphetal (DE)
(74) Vertreter: Rohmann, Michael

(56) Entgegenhaltungen:
- EP-A1- 1 570 973
- WO-A-20/04035297
- US-A1- 2005 184 188

## Beschreibung

Die Erfindung betrifft eine Vorrichtung zum Aufwickeln eines Faserstranges auf einen Formträger. Weiterhin betrifft die Erfindung ein Verfahren zum Aufwickeln des Faserstranges auf einen Formträger.

Vorrichtungen der vorstehend genannten Art, wie zum Beispiel aus WO-A-2004 035297, sind aus der Praxis in verschiedenen Ausführungsvarianten bekannt. Bei diesen Vorrichtungen ist man bemüht, den Faserstrang möglichst zügig auf den Formträger aufzuwickeln. Eine Steigerung der Geschwindigkeit des Aufwickelvorganges geht aber häufig zulasten der Funktionssicherheit des Wickelvorganges. Im Ergebnis lassen viele der bekannten Vorrichtungen sowohl im Hinblick auf die Geschwindigkeit des Aufwickelns als auch in Bezug auf die Funktionssicherheit des Aufwickelns zu wünschen übrig. Besondere Probleme bringt das Aufwickeln eines Faserstranges mit sich, der mit schmelzflüssigem thermoplastischen Kunststoff getränkt ist. Hier besteht zum einen das Problem des funktionssicheren Anwickelns eines Faserstrangendes an einen Formträger und zum anderen das Problem der Behandlung des bei Beendigung des Wickelvorganges und nach Durchführung des Schneidvorganges an dem Formträger verbleibenden Faserstrangendes. Dabei ist es bekannt das bereits erhärtete Faserstrangende in aufwändiger Weise wieder aufzuschmelzen und anschließend mit einer separaten Anbügelvorrichtung an den Formträger bzw. an den darauf aufgewickelten Faserstrang anzubügeln. Weiterhin ist es bekannt das Faserstrangende abzutrennen und zu entfernen. Das Entfernen und Entsorgen dieser Abfallstücke ist ebenfalls aufwendig. Viele Nachteile der bekannten Vorrichtungen haben sich auch dadurch ergeben, dass man der Auffassung war, dass der Faserstrang kontinuierlich und ohne jegliche Unterbrechung beim aufeinander folgenden Aufwickeln auf verschiedene Formträger zugeführt werden muss. Im Ergebnis sind die aus der Praxis bekannten Vorrichtungen verbesserungsfähig.

Der Erfindung liegt das technische Problem zugrunde, eine Vorrichtung der eingangs genannten Art anzugeben, mit der sowohl eine hohe Wickelgeschwindigkeit als auch ein problemloses und funktionssicheres Anwickeln und Aufwickeln auf den Formträgern möglich ist und bei der die vorstehend beschriebenen Nachteile vermieden werden können. Der Erfindung liegt insbesondere das technische Problem zugrunde, eine entsprechende Vorrichtung zum Aufwickeln eines mit schmelzflüssigem thermoplastischen Kunststoff getränkten Faserstranges anzugeben. Fernerhin liegt der Erfindung das technische Problem zugrunde, ein entsprechendes Verfahren bereit zu stellen.

Zur Lösung des technischen Problems lehrt die Erfindung eine Vorrichtung zum Aufwickeln eines Faserstranges auf zumindest einen Formträger, wobei der Formträger beim Aufwickeln des Faserstranges um seine Längsachse drehbar ist,
wobei an dem Formträger eine Manipuliervorrichtung vorgesehen ist, welche Manipuliervorrichtung um die Längsachse bzw. verlängerte Längsachse des Formträgers drehbar ist,
wobei die Manipuliervorrichtung zu Beginn eines Wickelvorgangs in eine Anwickelposition drehbar ist, in der ein zugeführtes Faserstrangende mit Hilfe der Manipuliervorrichtung an den Formträger anwickelbar ist
und wobei die Manipuliervorrichtung bei Beendigung eines Wickelvorganges in eine Schneidposition drehbar ist, in der der Faserstrang mit einer Schneideinrichtung durchtrennbar ist.

Es liegt im Rahmen der Erfindung, dass die erfindungsgemäß eingesetzten Formträger im Querschnitt rund bzw. kreisrund ausgebildet sind. Zweckmäßigerweise sind die Formträger zylinderförmig bzw. im Wesentlichen zylinderförmig ausgeführt. Die Stirnenden bzw. Stirnflächen der zylinderförmigen Formträger können dabei insbesondere abgerundet ausgebildet sein. Nach bevorzugter Ausführungsform der Erfindung wird als Formträger ein Kunststoffliner bzw. Kunststoffbehälter eingesetzt. Gemäß einer weiteren bevorzugten Ausführungsform wird als Formträger ein Metallliner bzw. Metallbehälter eingesetzt.

Die erfindungsgemäße Vorrichtung ist insbesondere für das Aufwickeln eines Faserstranges geeignet, der mit einem fluiden Medium getränkt ist, das insbesondere nach einiger Zeit trocknet bzw. erhärtet. Es liegt vor allem im Rahmen der Erfindung, dass die Vorrichtung zum Aufwickeln eines Faserstranges aus mit schmelzflüssigem thermoplastischen Kunststoff getränkten Fasern vorgesehen ist. Der Faserstrang besteht nach einer bevorzugten Ausführungsvariante aus einem Fasergemisch, wobei zumindest eine Komponente dieses Fasergemisches aus thermoplastischem Kunststoff besteht. Diese zumindest eine Komponente aus thermoplastischem Kunststoff wird vor dem Bewickeln der Formträger aufgeschmolzen. Die zumindest eine andere Komponente des Fasergemisches wird dagegen nicht aufgeschmolzen. Gemäß einer empfohlenen Ausführungsvariante handelt es sich bei dem Fasergemisch um ein Gemisch aus Glasfasern und Fasern aus thermoplastischem Kunststoff. - Mit der erfindungsgemäßen Vorrichtung können grundsätzlich aber auch vorimprägnierte Faserstränge (Prepregs) auf Formträger aufgewickelt werden. In diesem Fall ist ein Aufschmelzen nicht erforderlich.

Eine besonders bevorzugte Ausführungsform der Erfindung ist dadurch gekennzeichnet, dass eine bezüglich der Förderrichtung des Faserstranges vor dem zu bewickelnden Formträger angeordnete Heizvorrichtung zum Aufschmelzen des thermoplastischen Kunststoffes vorgesehen ist. Bei der Heizvorrichtung handelt es sich beispielsweise um eine Infrarot-Heizvorrichtung.

Zweckmäßigerweise wird der thermoplastische Kunststoff des Faserstranges erst kurz vor bzw. unmittelbar vor dem Wickelvorgang aufgeschmolzen, sodass der Faserstrang mit schmelzflüssigem thermoplastischem Kunststoff auf den Formträger aufgewickelt wird. Der schmelzflüssige Kunststoff erhärtet in der Regel relativ schnell. Zweckmäßigerweise wird der mit Hilfe der Heizvorrichtung aufgeschmolzene thermoplastische Kunststoff mechanisch in die Fasern des Faserstranges eingearbeitet. Dazu wird der Faserstrang beispielsweise über entsprechende Rollen oder Bolzen geführt, die eine Einarbeitung des schmelzflüssigen Kunststoffes in den Faserstrang bewirken.

Es liegt im Rahmen der Erfindung, dass eine Verlegeeinrichtung vorgesehen ist, mit der der aufzuwickelnde Faserstrang an den zu bewickelnden Formträger heranführbar ist bzw. diesem Formträger zuführbar ist. Zweckmäßigerweise wird der Faserstrang während des Anwickelns und während des Aufwickelns auf einen Formträger kontinuierlich zugeführt. Nach einer sehr bevorzugten Ausführungsform der Erfindung ist eine Klemmeinrichtung vorgesehen, die bezüglich der Förderrichtung des Faserstranges bevorzugt vor der Verlegeeinrichtung angeordnet ist und mit der der Faserstrang festgeklemmt werden kann. Durch dieses Festklemmen des Faserstranges in der Klemmeinrichtung wird zumindest kurzfristig die kontinuierliche Zuführung des Faserstranges unterbrochen. Zweckmäßigerweise wird der Faserstrang im Zuge der Beendigung eines Wickelvorganges auf einen Formträger bzw. im Zuge des Durchtrennens des Faserstranges mit der Schneideinrichtung in der Klemmeinrichtung festgeklemmt. Durch das Festklemmen wird ein Zurückrutschen des durchtrennten Faserstranges aus der Verlegeeinrichtung heraus in Richtung Heizvorrichtung verhindert. Dieses Festklemmen in der Klemmvorrichtung und die Unterbrechung der kontinuierlichen Faserzufuhr wird nachfolgend noch detaillierter erläutert. - Die vorstehend bereits erläuterte Heizvorrichtung ist vorzugsweise bezüglich der Förderrichtung des Faserstranges vor der Klemmeinrichtung und empfohlenermaßen vor dem Aggregat aus Klemmeinrichtung und Verlegeeinrichtung angeordnet.

Gemäß besonders bevorzugter Ausführungsform der Erfindung weist die Manipuliervorrichtung eine Greifrolle auf, mit der das anzuwickelnde Faserstrangende in der Anwickelposition an den Formträger drückbar ist. Zweckmäßigerweise wird das von der Verlegeeinrichtung gehaltene Faserstrangende zunächst durch eine Bewegung der Greifrolle aufgerichtet. Anschließend wird die Greifrolle vorzugsweise über das aufgerichtete Faserstrangende gefahren und das Faserstrangende wird mit der Greifrolle an den Formträger angedrückt. Es liegt im Rahmen der Erfindung, dass der Formträger und die Manipuliervorrichtung beim anschließenden Anwickelvorgang synchron drehen und dass die an die Manipuliervorrichtung angeschlossene Greifrolle dabei das Faserstrangende an den Formträger andrückt. Synchron drehen meint hier, dass Formträger und Manipuliereinrichtung in die gleiche Richtung mit der gleichen Geschwindigkeit rotieren. Die an die Manipuliervorrichtung angeschlossene Greifrolle drückt bei der synchronen Drehung das Faserstrangende an den Formträger. Vorzugsweise ist dabei die Greifrolle nur in eine Richtung mit der Maßgabe drehbar, dass das unter ihr befindliche Faserstrangende nicht aufgrund einer entsprechenden Drehung der Greifrolle aus dem Eingriffsbereich der Greifrolle rutschen kann. Zweckmäßigerweise verhindert eine Rücklaufsperre das Drehen der Greifrolle in der anderen unerwünschten Richtung. Vorzugsweise weist die Manipuliervorrichtung zumindest zwei Greifrollen auf, die empfohlenermaßen bezüglich des Umfanges des Formträger diametral gegenüberliegend angeordnet sind. Zweckmäßigerweise sind beide Greifrollen nur in eine Drehrichtung drehbar und die andere Drehrichtung ist bevorzugt jeweils durch eine Rücklaufsperre blockiert. Es empfiehlt sich, dass der Formträger und die Manipuliervorrichtung beim Anwickelvorgang synchron drehen und dabei vorzugsweise zumindest über eine volle Umdrehung des Formträgers synchron drehen.

Nach dem Anwickelvorgang wird die Manipuliereinrichtung gemäß bevorzugter Ausführungsform in eine Parkposition überführt, in der keine Drehung der Manipuliereinrichtung erfolgt. Vorzugsweise wird die Greifrolle bzw. werden die Greifrollen in der Parkposition außer Kontakt mit dem Faserstrangende/Faserstrang bzw. mit dem Formträger gebracht. Zweckmäßigerweise ist eine Greifrolle dazu an einen Schwenkhebel angeschlossen, mit dem die Greifrolle von dem Formträger abgeschwenkt werden kann.

An den Anwickelvorgang schließt der eigentliche Aufwickelvorgang an, bei dem die Manipuliereinrichtung vorzugsweise ohne Drehung in der Parkposition verbleibt. Beim Aufwickelvorgang wird der Faserstrang kontinuierlich auf den Formträger aufgewickelt und zwar zweckmäßigerweise von einem Stirnende zum gegenüberliegenden Stirnende des Formträgers und wieder zurück. Bevorzugt findet eine gleichsam wendelförmige Aufwicklung des Faserstranges von einem Stirnende zum anderen Stirnende auf dem Formträger statt. Die Bewicklung von einem Stirnende zum gegenüberliegenden Stirnende und wieder zurück kann beim Aufwickelvorgang mehrfach wiederholt werden. Es ist darauf hinzuweisen, dass nach sehr bevorzugter Ausführungsform der Erfindung der Faserstrang sowohl beim Anwickelvorgang als auch beim eigentlichen Aufwickelvorgang stets mit der flüssigen Substanz bzw. stets mit dem schmelzflüssigen thermoplastischen Kunststoff getränkt bzw. überzogen ist. Der thermoplastische Kunststoff wird zweckmäßigerweise in der bezüglich der Förderrichtung des Faserstranges vor dem Formträger angeordneten Heizvorrichtung kontinuierlich aufgeschmolzen und Faserstrang mit dem aufgeschmolzenen thermoplastischen Kunststoff wird dem Formträger kontinuierlich beim Anwickeln und Aufwickeln zugeführt. Es empfiehlt sich, dass der Formträger sowohl beim Anwickelvorgang als auch beim Aufwickelvorgang kontinuierlich in die gleiche Richtung rotiert und zwar vorzugsweise mit gleichbleibender Drehgeschwindigkeit.

Bei Beendigung des Wickelvorganges bzw. Aufwickelvorganges wird die Manipuliervorrichtung in die Schneidposition gedreht und zwar vorzugsweise aus der vorgenannten Parkposition in die Schneidposition gedreht. Es liegt im Rahmen der Erfindung, dass vor dem Durchtrennen des Faserstranges mit der Schneideinrichtung die Drehung des Formträgers gestoppt wird. In der Schneidposition wird eine Greifrolle an den Faserstrang angedrückt und der Faserstrang wird mit der Schneidvorrichtung durchtrennt. Zweckmäßigerweise findet im Zuge des Schneidvorganges bzw. vor dem Schneidvorgang ein Klemmen des Faserstranges in der Klemmeinrichtung statt, die bevorzugt bezüglich der Förderrichtung des Faserstranges vor der Verlegeeinrichtung angeordnet ist. Durch das Festklemmen des Faserstranges wird ein Herausrutschen des Faserstrangendes aus der Verlegeeinrichtung in Richtung Klemmeinrichtung bzw. Heizvorrichtung vermieden. Bei diesem Klemmen des Faserstranges wird die kontinuierliche Faserstrangzufuhr unterbrochen.

Es liegt im Übrigen im Rahmen der Erfindung, dass die Schneideinrichtung zum Durchtrennen des Faserstranges an die Manipuliervorrichtung angeschlossen ist. Zweckmäßigerweise wird das nach dem Durchtrennen des Faserstranges auf dem Formträger verbleibende Faserstrangende mit der Greifrolle an den Formträger bzw. auf den dort aufgewickelten Faserstrang angerollt/angedrückt. Dabei handelt es sich um das noch heiße mit dem schmelzflüssigen Kunststoff getränkte/überzogene Faserstrangende. Das Anrollen bzw. Andrücken des Faserstrangendes erfolgt dabei vorzugsweise so, dass die Manipuliervorrichtung stillsteht und der Formträger rotiert, sodass die an die Manipuliervorrichtung angeschlossene Greifrolle gleichsam über das Faserstrangende rollt und das Faserstrangende an den Formträger andrückt. Empfohlenermaßen rollen auf diese Weise beide an die Manipuliervorrichtung angeschlossene Greifrollen nacheinander über das Faserstrangende. Zweckmäßigerweise findet zum Zwecke dieses Anrollens/Andrückens zumindest eine halbe Umdrehung des Formträgers statt, bei der die Greifrolle bzw. bei der die Greifrollen in Kontakt mit dem Formträger bzw. dem darauf befindlichen Faserstrang sind. Nach dem Anrollen/Andrücken des Faserstrangendes wird die Manipuliervorrichtung zweckmäßigerweise wieder in eine Parkposition gefahren, in der die Greifrolle bzw. in der die Greifrollen außer Kontakt mit dem Formträger gebracht sind. - Statt einer Greifrolle bzw. statt Greifrollen können auch Wischerelemente oder Anstreiferelemente eingesetzt werden.

Eine ganz besonders bevorzugte Ausführungsform der Erfindung ist dadurch gekennzeichnet, dass die Vorrichtung zur gleichzeitigen Aufnahme von zwei Formträgern eingerichtet ist und dass jedem dieser beiden Formträger eine Manipuliervorrichtung zugeordnet ist. Die Vorrichtung ist mit der Maßgabe eingerichtet, dass zuerst der erste Formträger und anschließend der zweite Formträger mit dem Faserstrang bewickelt wird. Ein fertig bewickelter Formträger wird dann jeweils gegen einen neuen unbewickelten Formträger ausgetauscht. Wenn also der erste Formträger fertig bewickelt ist, findet anschließend die Bewicklung des zweiten Formträgers statt und währenddessen wird zweckmäßigerweise der erste fertig bewickelte Formträger gegen einen neuen unbewickelten Formträger ausgetauscht. Nach empfohlener Ausführungsform der Erfindung sind die beiden Formträger mit ihren ersten Stirnenden einander gegenüberliegend angeordnet und die Manipuliervorrichtung ist jeweils an dem zweiten Stirnende eines Formträgers angeordnet.

Gegenstand der Erfindung ist auch ein Verfahren zum Aufwickeln eines Faserstranges, wobei der Faserstrang mit der Verlegeeinrichtung zunächst dem ersten Formträger zugeführt wird und auf dem ersten Formträger aufgewickelt wird,
wobei bei Beendigung des Wickelvorganges auf den ersten Formträger der Faserstrang durchtrennt wird und die Verlegeeinrichtung anschließend mit dem von ihr aufgenommen Faserstrangende zu dem zweiten Formträger verschwenkt wird und der Faserstrang anschließend auf dem zweiten Formträger aufgewickelt wird, während der erste fertig bewickelte Formträger gegen einen neuen unbewickelten Formträger ausgetauscht wird
und wobei bei Beendigung des Wickelvorganges auf den zweiten Formträger der Faserstrang durchtrennt wird und die Verlegeeinrichtung anschließend mit dem von ihr aufgenommenen Faserstrang zu dem unbewickelten Formträger zurückgeschwenkt wird. Im Anschluss daran wird der Faserstrang auf diesen neuen unbewickelten Formträger aufgewickelt und währenddessen wird der zweite fertig bewickelte Formträger gegen einen neuen unbewickelten Formträger ausgetauscht und so weiter fort.

Es liegt im Rahmen der Erfindung, dass der Faserstrang beim Verschwenken bzw. Zurückschwenken der Verlegeeinrichtung in der Klemmeinrichtung festgeklemmt wird, sodass ein Herausrutschen des Faserstrangendes aus der Verlegeeinrichtung vermieden wird und eine kontinuierliche Faserstrangzufuhr während der Schwenkbewegung der Verlegeeinrichtung unterbrochen ist. Zweckmäßigerweise dauert dieser Klemmvorgang bzw. die Unterbrechung der kontinuierlichen Faserstrangzufuhr 3 bis 20 Sekunden, vorzugsweise 5 bis 15 Sekunden und sehr bevorzugt 5 bis 10 Sekunden. Es liegt also im Rahmen der Erfindung, dass die Unterbrechung der kontinuierlichen Faserstrangzufuhr nur wenige Sekunden dauert. Aufgrund dieser kurzen Unterbrechungen handelt es sich bei dem erfindungsgemäßen Wickelverfahren insgesamt um ein diskontinuierliches Wickelverfahren, obwohl die Bewicklung der einzelnen Formträger (Anwickelvorgang und Aufwickelvorgang) jeweils kontinuierlich erfolgt.

Der Erfindung liegt die Erkenntnis zugrunde, dass mit der erfindungsgemäßen Vorrichtung bzw. mit dem erfindungsgemäßen Verfahren ein sehr funktionssicheres Aufwickeln eines Faserstranges auf Formträger bei nichtsdestoweniger hoher Arbeitsgeschwindigkeit bzw. Wickelgeschwindigkeit möglich ist. Im Hinblick darauf ist die erfindungsgemäße Vorrichtung verhältnismäßig einfach und wenig aufwendig aufgebaut. Die erfindungsgemäße Vorrichtung und das erfindungsgemäße Verfahren eignen sich vor allem für das Aufwickeln von Fasersträngen, die mit einem flüssigen Medium überzogen/getränkt sind, das relativ schnell erhärtet. Ganz besonders geeignet sind die Vorrichtung und das Verfahren für das Aufwickeln eines mit schmelzflüssigem thermoplastischen Kunststoff getränkten/überzogenen Faserstranges. Die erfindungsgemäße Vorrichtung wird bevorzugt für das Bewickeln eines Formträgers aus Kunststoff bzw. eines Kunststoffbehälters oder für das Bewickeln eines Formträgers aus Metall bzw. eines Metallbehälters eingesetzt. Grundsätzlich könnten mit der erfindungsgemäßen Vorrichtung aber auch Formträger aus einem anderen Material bewickelt werden. Der Erfindung liegt die Erkenntnis zugrunde, dass es für eine insgesamt hohe Wickelgeschwindigkeit und für ein funktionssicheres Aufwickeln eines Faserstranges nicht schädlich ist, wenn der Vorgang beim Wechsel von einem Formträger zu dem anderen Formträger kurz unterbrochen wird bzw. wenn die kontinuierliche Zuführung des Faserstranges durch Festklemmen des Faserstranges kurz unterbrochen wird. Vielmehr ergibt sich durch die erfindungsgemäße Verfahrensweise eine einfache und funktionssichere Bewicklungsmöglichkeit mit nichtsdestoweniger überraschend hoher Arbeitsgeschwindigkeit. Von besonderer Bedeutung ist auch, dass mit der erfindungsgemäßen Vorrichtung das nach dem Durchtrennen des Faserstranges auf dem jeweiligen Formträger verbleibende Faserstrangende, sehr funktionssicher und sauber formschlüssig an den Formträger angedrückt bzw. angerollt werden kann. Eine aus dem Stand der Technik bekannte separate Einrichtung zum Aufschmelzen und Anbügeln des Faserstrangendes ist nicht mehr erforderlich. Somit entfallen im Vergleich zu diesem Stand der Technik zusätzliche zeitaufwendige Arbeitsschritte. Bei dem erfindungsgemäßen Verfahren fallen auch keine unerwünschten Abfallstücke des Faserstranges durch Abtrennen des Faserstrangendes an. Deshalb ist auch keine zusätzliche Einrichtung zum Entfernen bzw. Entsorgen solcher Abfallstücke erforderlich. Im Ergebnis kommt die erfindungsgemäße Vorrichtung mit wenigen Verfahrensschritten aus und arbeitet insoweit wenig aufwendig bzw. zeitaufwendig. Hervorzuheben ist auch, dass sich die erfindungsgemäße Vorrichtung relativ kostengünstig realisieren lässt.

Nachfolgend wird die Erfindung anhand einer lediglich ein Ausführungsbeispiel darstellenden Zeichnung näher erläutert. Es zeigen in schematischer Darstellung:
- Fig. 1: Eine Draufsicht auf eine erfindungsgemäße Vorrichtung zum Aufwickeln eines Faserstranges,
- Fig. 2: eine perspektivische Ansicht des linken Vorrichtungsteils aus Fig. 1 in einer ersten Funktionsstellung,
- Fig. 3: den Gegenstand gemäß Fig. 2 in einer zweiten Funktionsstellung,
- Fig. 4: den Gegenstand nach Fig. 2 in einer dritten Funktionsstellung,
- Fig. 5: den Gegenstand aus Fig. 2 in einer vierten Funktionsstellung,
- Fig. 6: den Gegenstand nach Fig. 2 in einer fünften Funktionsstellung,
- Fig. 7: den Gegenstand gemäß Fig. 2 in einer sechsten Funktionsstellung,
- Fig. 8: den Gegenstand aus Fig. 2 in einer siebten Funktionsstellung,
- Fig. 9: den Gegenstand nach Fig. 2 in einer achten Funktionsstellung,

- Fig. 10: den Gegenstand gemäß Fig. 2 in einer neunten Funktionsstellung,
- Fig. 11: den Gegenstand aus Fig. 2 in einer zehnten Funktionsstellung und
- Fig. 12: den Gegenstand nach Fig. 2 in einer elften Funktionsstellung.

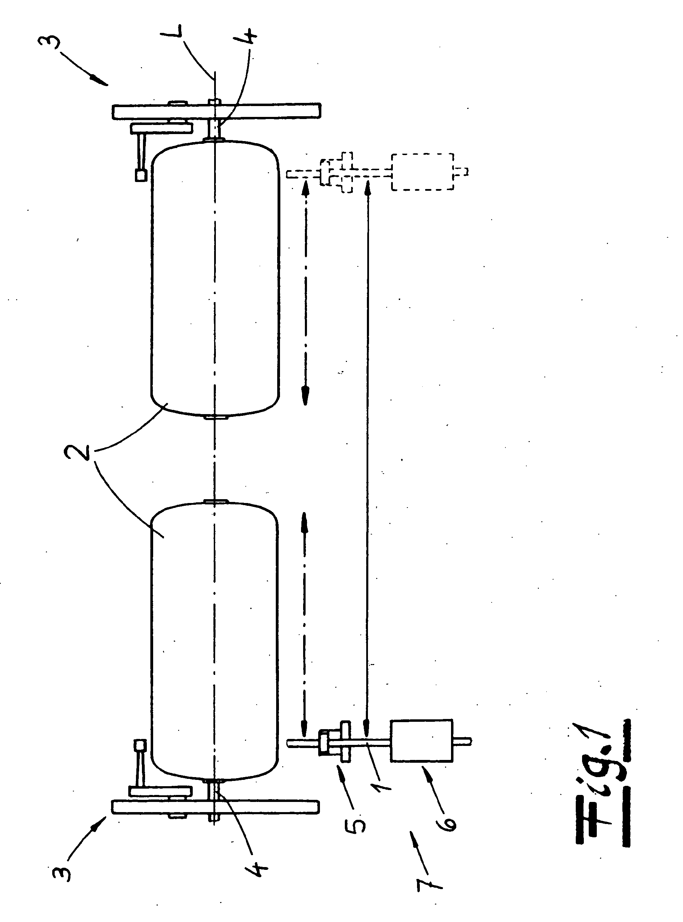

Die Figuren zeigen eine erfindungsgemäße Vorrichtung zum Aufwickeln eines Faserstranges 1 auf Formträger 2. Nach besonders bevorzugter Ausführungsform und im Ausführungsbeispiel ist die Vorrichtung zur gleichzeitigen Aufnahme von zwei Formträgern 2 eingerichtet (siehe Fig. 1). Die Formträger 2 sind beim Aufwickeln des Faserstranges 1 um ihre Längsachse L drehbar. In Fig. 1 sind die beiden Formträger 2 mit ihren ersten Stirnenden einander gegenüberliegend angeordnet. An dem anderen Stirnende jedes Formträgers 2 ist jeweils eine Manipuliervorrichtung 3 vorgesehen, die um die (verlängerte) Längsachse L der Formträger 2 drehbar ist und zwar entweder unabhängig von dem jeweiligen Formträger 2 oder synchron mit dem jeweiligen Formträger 2. Es liegt im Rahmen der Erfindung, dass die Formträger 2 als Hohlkörper ausgebildet sind. Bei den Formträgern 2 handelt es sich im Ausführungsbeispiel um Formträger 2 aus Kunststoff, die einen kreisrunden Querschnitt aufweisen und im Wesentlichen zylinderförmig ausgebildet sind. An den den Manipuliervorrichtungen 3 zugewandten Stirnenden werden die Formträger 2 jeweils von einer mitlaufenden Körnerspitze 4 gestützt, die vorzugsweise und im Ausführungsbeispiel die Manipuliervorrichtung 3 jeweils durchgreift, sodass die Formträger 2 mit nicht näher dargestellten Antriebsvorrichtungen jeweils unabhängig von der Manipuliervorrichtung 3 drehbar sind.

In der Fig. 1 ist weiterhin erkennbar, dass der Faserstrang 1 einem Formträger 2 mittels einer Verlegeeinrichtung 5 zuführbar ist. Der Verlegeeinrichtung 5 ist eine Klemmeinrichtung 6 vorgeschaltet, mit der der Faserstrang 1 festgeklemmt werden kann, sodass die kontinuierliche Zuführung des Faserstranges 1 unterbrochen wird. Das wird nachfolgend noch erläutert. - Es liegt im Rahmen der Erfindung, dass in Förderrichtung des Faserstranges 1 vor der Klemmeinrichtung 6 eine in den Figuren nicht dargestellte Heizvorrichtung angeordnet ist. Zweckmäßigerweise wird der Faserstrang 1 dieser Heizvorrichtung in Form eines Fasergemisches zugeführt, wobei zumindest eine Faserkomponente dieses Fasergemisches aus thermoplastischem Kunststoff besteht. Dieser thermoplastische Kunststoff wird vorzugsweise in der Heizvorrichtung kontinuierlich aufgeschmolzen. Das genannte Fasergemisch enthält zweckmäßigerweise zumindest eine Faserkomponente, die nicht aufgeschmolzen wird. Den Formträgern 2 wird der mit dem schmelzflüssigem thermoplastischen Kunststoff überzogene/getränkte Faserstrang 1 zugeführt. Es liegt im Rahmen der Erfindung, dass beim Anwickeln bzw. Aufwickeln auf einen Formträger 2 dieser mit schmelzflüssigem Kunststoff überzogene/getränkte Faserstrang 1 kontinuierlich zugeführt wird.

In Fig. 1 wird durch Doppelpfeile angedeutet, dass das Aggregat 7 aus Verlegeeinrichtung 5 und Klemmeinrichtung 6 in Richtung der Längsachse L der Formträger verschwenkbar bzw. bewegbar ist. Zunächst wird der erste in Fig. 1 linke Formträger 2 bewickelt und dabei verschwenkt das Aggregat 7 aus Verlegeeinrichtung 5 und Klemmeinrichtung 6 entlang des strichpunktierten Doppelpfeiles unter dem linken Formträger 2 von einem zum anderen Ende des Formträgers 2 und zurück. Wenn der in Fig. 1 linke Formträger 2 fertig bewickelt ist, verschwenkt das Aggregat 7 entlang des ausgezogenen Doppelpfeiles zum zweiten in Fig. 1 rechten Formträger 2 und dann wird dieser rechte Formträger 2 bewickelt. Der Anwickelvorgang beginnt dabei zweckmäßigerweise und im Ausführungsbeispiel an dem der Manipuliervorrichtung 3 zugeordneten Stirnende des rechten Formträgers 2. Dementsprechend beginnt bei dem ersten in Fig. 1 linken Formträger 2 der Anwickelvorgang ebenfalls vorzugsweise an dem der Manipuliervorrichtung 3 zugeordneten Stirnende des linken Formträgers 2. Mit dem unter dem in Fig. 1 rechten Formträger 2 erkennbaren strichpunktierten Doppelpfeil wird angedeutet, dass das Aggregat 7 aus Verlegeeinrichtung 5 und Klemmeinrichtung 6 zum Bewickeln des zweiten Formträgers 2 von einem Stirnende zum anderen Stirnende des Formträgers 2 und zurück verschwenkbar ist. Dabei kann das Aggregat 7 diesen Weg beim Bewickeln des jeweiligen Formträgers 2 auch mehrfach beschreiten. Während der in Fig. 1 rechte Formträger 2 bewickelt wird, kann der bereits fertig bewickelte erste Formträger 2 der Vorrichtung entnommen werden und gegen einen neuen unbewickelten Formträger 2 ausgetauscht werden. Wenn der zweite rechte Formträger 2 fertig bewickelt ist, verschwenkt das Aggregat 7 wieder zum linken Formträger 2 und dann wird dieser bewickelt, während der rechte Formträger 2 der Vorrichtung entnommen und gegen einen neuen unbewickelten Formträger 2 ausgetauscht werden kann und so weiter fort. Während der Verschwenkung des Aggregates 7 von dem einen linken Formträger 2 zu dem anderen rechten Formträger 2 und zurück, ist der Faserstrang 1 vorzugsweise und im Ausführungsbeispiel in der Klemmeinrichtung 6 festgeklemmt, sodass während dieser Verschwenkung des Aggregates 7 die kontinuierliche Faserstrangzufuhr unterbrochen ist. Dagegen findet bei der Verschwenkung des Aggregates 7 entlang lediglich eines Formträgers 2 und zurück im Zuge des Aufwickelvorganges auf diesen Formträger 2 eine kontinuierliche Faserstrangzufuhr statt, bei der die Klemmeinrichtung 6 nicht aktiviert ist.

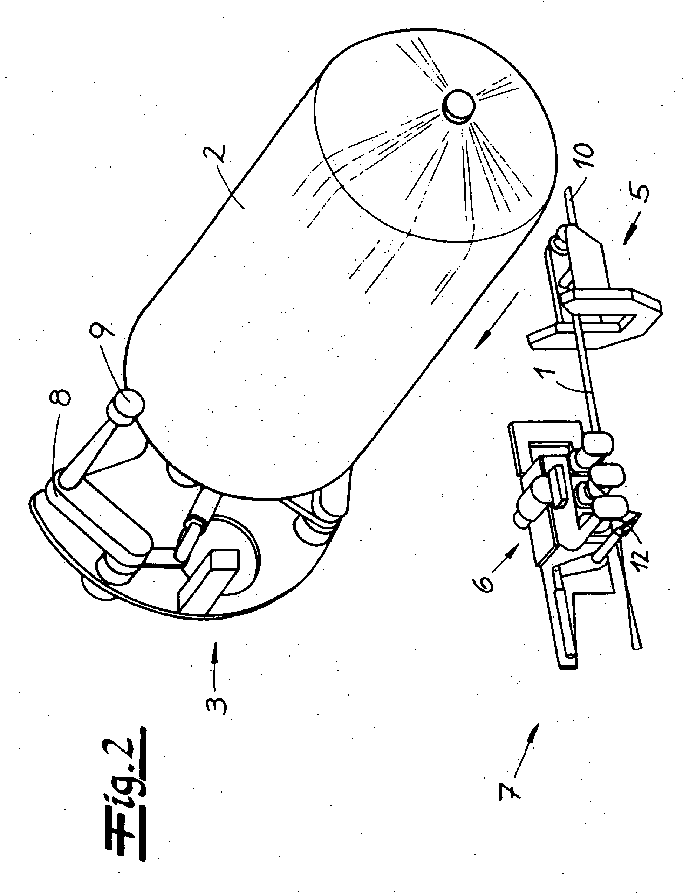

In den Figuren 2 bis 12 wird lediglich der aus Fig. 1 linke Formträger 2 mit zugeordneter Manipuliervorrichtung 3 dargestellt. Anhand dieses linken Formträgers 2 wird das erfindungsgemäße Wickelverfahren erläutert. Analog findet auch die Bewicklung des in Fig. 1 rechten Formträgers 2 statt. In der Fig. 2 ist ein Funktionszustand gezeigt, in dem der Wickelvorgang an dem in Fig. 2 nicht dargestellten rechten Formträger 2 gerade abgeschlossen ist und das Aggregat 7 aus Verlegeeinrichtung 5 und Klemmeinrichtung 6 zum linken Formträger 2 zurückgeschwenkt wird. In diesem Funktionszustand befindet sich die Manipuliervorrichtung 3 des linken Formträgers 2 in einer in Fig. 2 dargestellten Parkposition, in der die Manipuliervorrichtung 3 stillsteht bzw. in der keine Drehung der Manipuliervorrichtung 3 erfolgt. An die Manipuliervorrichtung 3 sind über zwei Schwenkarme 8 zwei Greifrollen 9 angeschlossen, die in der Parkposition beabstandet zur Formträgeroberfläche angeordnet sind. In Fig. 2 ist lediglich eine dieser Greifrollen 9 erkennbar. Die beiden Greifrollen 9 sind bezüglich des Umfangs des Formträgers 2 diametral gegenüberliegend angeordnet. Durch Betätigen der Schwenkarme 8 können die Greifrollen 9 in Kontakt mit der Oberfläche des Formträgers 2 bzw. in Kontakt mit dem dort aufgewickelten Faserstrang 1 gebracht werden.

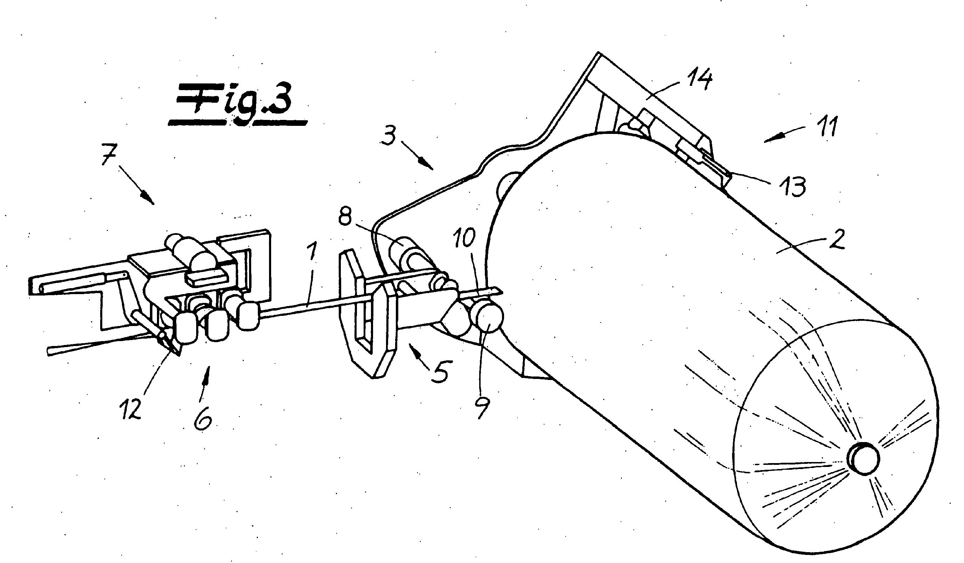

Für das Anwickeln des Faserstranges 1 an den (linken) Formträger 2 wird die Manipuliervorrichtung 3 in eine Anwickelposition gedreht, die in Fig. 3 dargestellt ist. Hier befindet sich auch das Aggregat 7 aus Verlegeeinrichtung 5 und Klemmeinrichtung 6 in einer Anwickelposition, in der sich das Faserstrangende 10 oberhalb einer Greifrolle 9 der Manipuliervorrichtung 3 befindet.

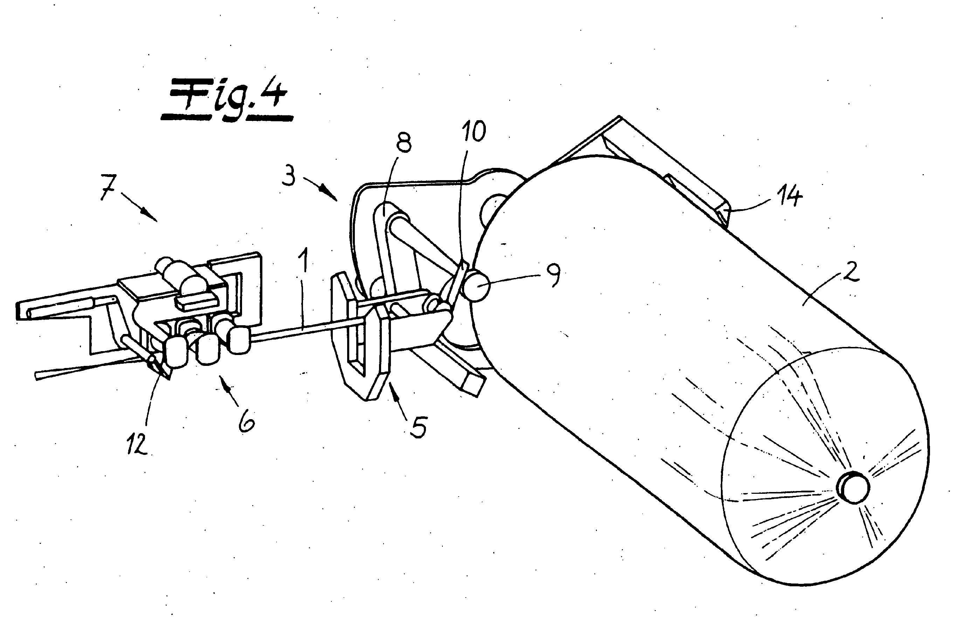

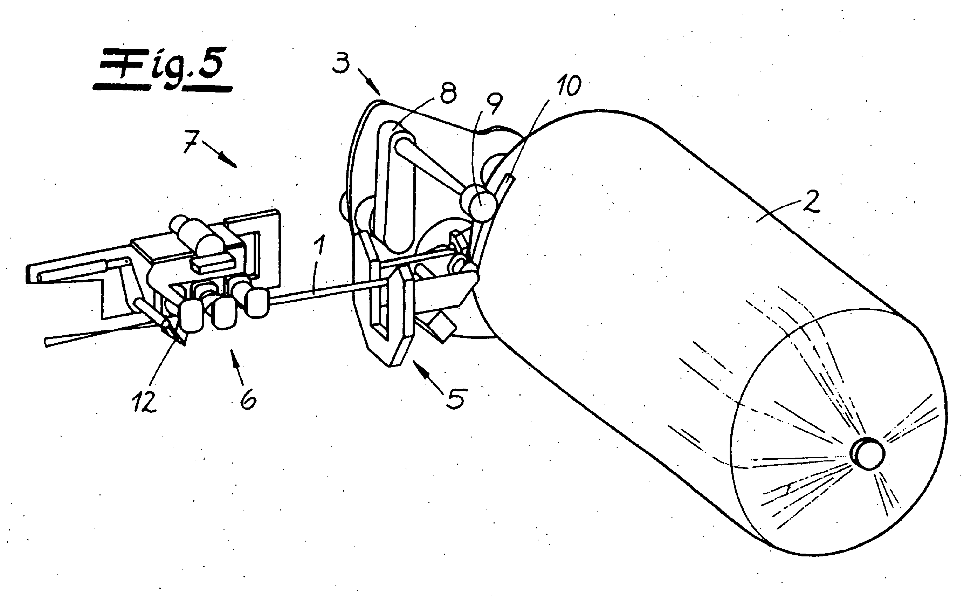

In der Anwickelposition werden die Greifrollen 9 zunächst im Kontakt mit der Oberfläche des Formträgers 2 gebracht. Anschließend wird die Manipuliervorrichtung 3 (synchron mit dem Formträger 2) etwas in Richtung der vorherigen Parkposition zurückgedreht, sodass das Faserstrangende 10 - wie in Fig. 4 gezeigt - durch die eine Greifrolle 9 angehoben bzw. gleichsam abgeknickt wird. Diese Greifrolle 9 fährt dann an der Endkante des Faserstrangendes 10 vorbei weiter in Richtung der vorherigen Parkposition. Daraufhin werden die Greifrollen 9 außer Kontakt mit der Formträgeroberfläche gebracht und die Manipuliervorrichtung 3 dreht dann ein Stück zurück, sodass sich die letztgenannte Greifrolle 9 über dem Faserstrangende 10 befindet. Dann wird die Greifrolle 9 mittels des zugeordneten Schwenkarmes 8 auf das Faserstrangende 10 gedrückt, sodass dieses an den Formträger 2 angedrückt wird. Dieser Zustand der Anwickelposition ist in Fig. 5 dargestellt.

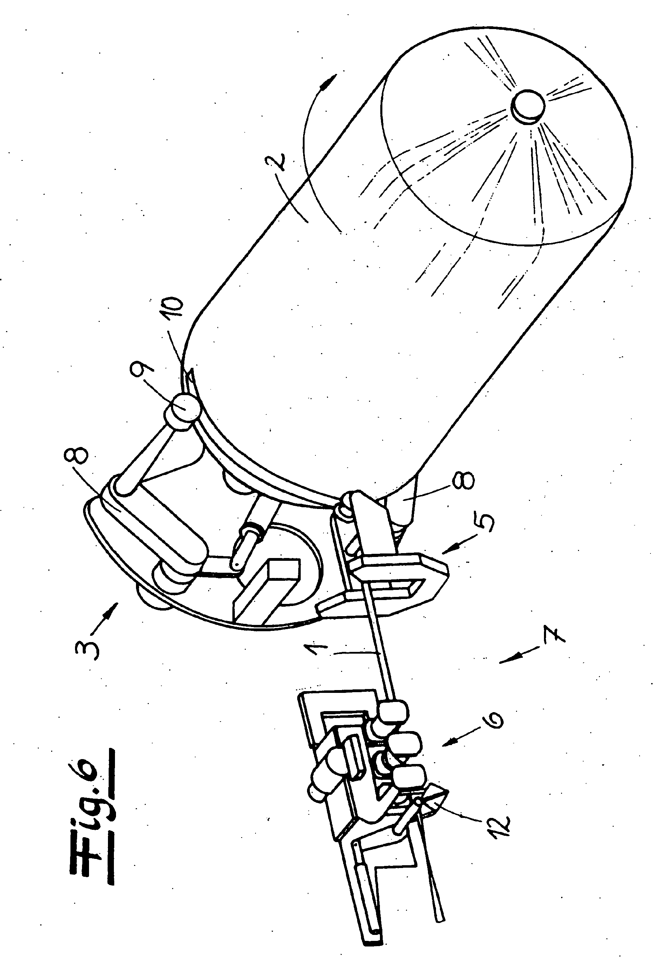

Beim weiteren Anwickelvorgang drehen Formträger 2 und Manipuliervorrichtung 3 synchron in Richtung des in Fig. 6 dargestellten Pfeiles. Die Greifrolle 9 drückt bei dieser synchronen Drehung weiterhin das Faserstrangende 10 an den Formträger 2. Die Greifrollen 9 sind vorzugsweise und im Ausführungsbeispiel nur in eine Richtung drehbar und die Drehbewegung in die andere Richtung ist jeweils durch eine entsprechende Rücklaufsperre blockiert. Die in Fig. 6 dargestellte Greifrolle 9 kann nur nach links und nicht nach rechts drehen, sodass das Faserstrangende 10 fest zwischen Greifrolle 9 und Formträger 2 geklemmt bleibt und nicht aufgrund einer Rechtsdrehung der Greifrolle 9 herausrutschen kann. Die synchrone Drehung von Formträger 2 und Manipuliervorrichtung 3 mit an das Faserstrangende 10 angedrückter Greifrolle 9 findet vorzugsweise über zumindest eine volle Umdrehung des Formträgers 2 statt.

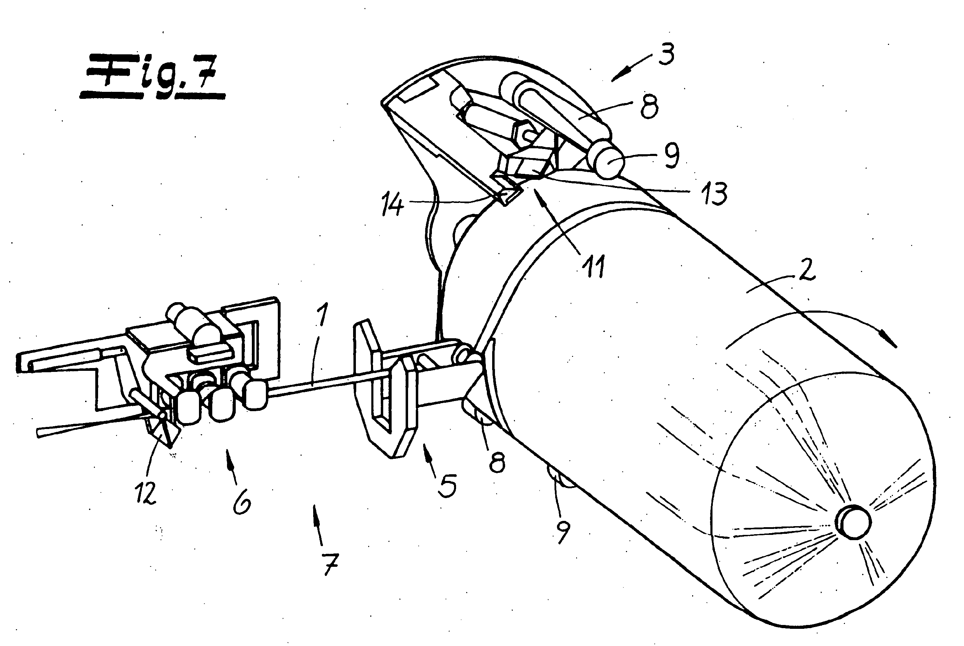

Im Anschluss daran wird die Manipuliervorrichtung 3 in die in Fig. 7 dargestellte Parkposition gedreht und die Greifrollen 9 werden hier mittels ihrer Schwenkarme 8 von dem Formträger 2 abgeschwenkt und außer Kontakt mit dem Formträger 2 bzw. mit dem darauf aufgewickelten Faserstrang 1 gebracht. Der Formträger 2 dreht dabei kontinuierlich in Richtung des in Fig, 7 gezeigten Pfeiles weiter. Jetzt findet der eigentliche Aufwickelvorgang statt, wobei das Aggregat 7 von dem der Manipuliervorrichtung 3 zugeordneten Stirnende des Formträgers 2 zu dessen gegenüberliegenden Stirnende verschwenkt wird, sodass bei rotierendem Formträger 2 ein gleichsam wendelförmiges Aufwickeln des Faserstranges 1 auf den Formträger 2 stattfindet. Im Anschluss daran wird das Aggregat 7 bei rotierendem Formträger 2 von dem letztgenannten Stirnende wieder zu dem der Manipuliervorrichtung 3 zugeordneten Stirnende des Formträgers 2 zurückgeschwenkt. Diese Schwenkbewegungen des Aggregates 7 können mehrfach nacheinander vollzogen werden, sodass mehrere Faserstrangschichten auf den Formträger 2 aufgebracht werden.

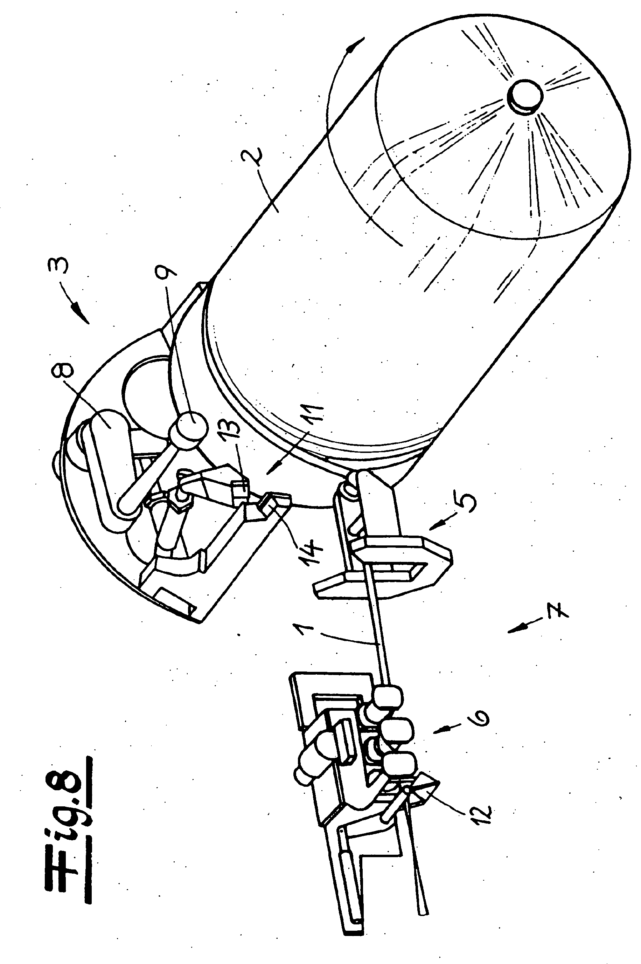

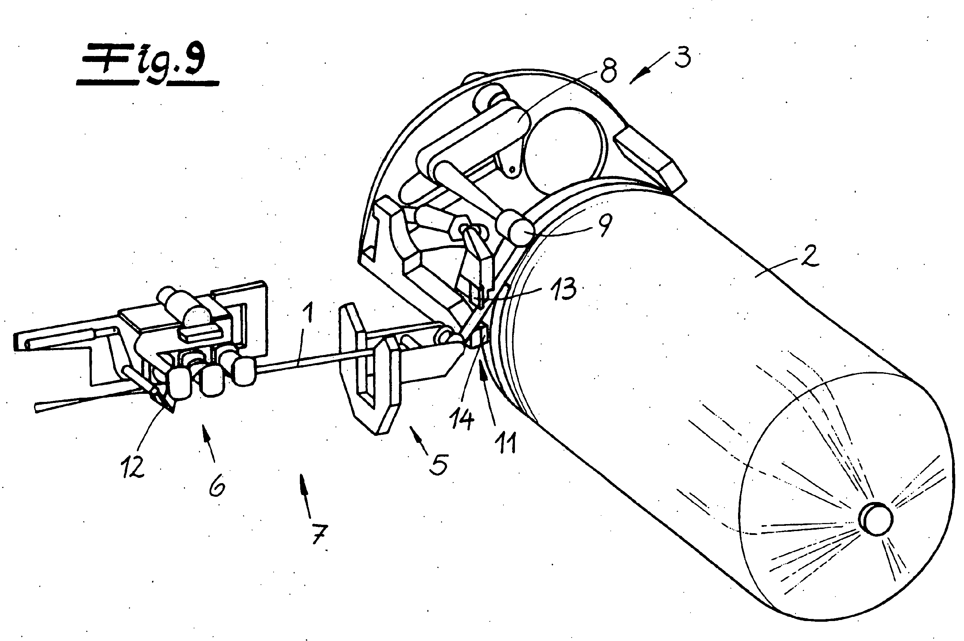

Zur Beendigung des Wickelvorganges am Formträger 2 muss der Faserstrang 1 durchtrennt werden. Hierzu ist an die Manipuliervorrichtung 3 eine in Fig. 7 erkennbare Schneideinrichtung 11 angeschlossen. Bei Beendigung des Wickelvorganges wird die Manipuliervorrichtung 3 aus der in Fig. 7 dargestellten Parkposition in eine in Fig. 9 dargestellte Schneidposition gedreht. Fig. 8 zeigt eine Zwischenposition von Manipuliervorrichtung 3 und Aggregat 7.

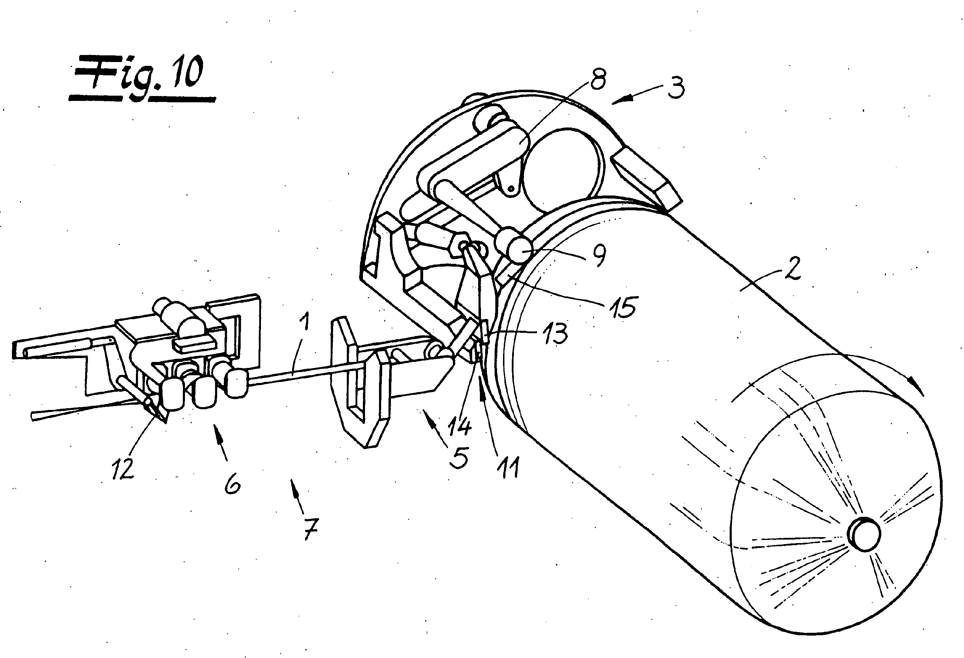

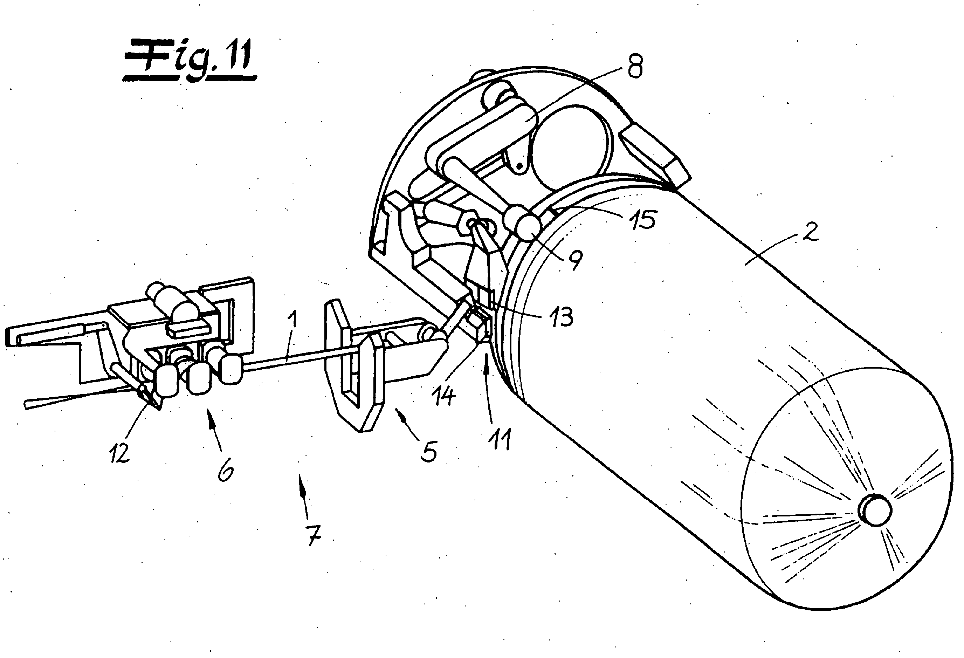

In der Schneidposition stoppt die Drehung der Formträger 2 und der Faserstrang 1 wird mit Hilfe der Klemmeinrichtung 6 festgeklemmt. Fig. 8 zeigt ein entsprechendes Klemmelement 12 im noch nicht aktivierten Zustand und in Fig. 9 ist das Klemmelement 12 aktiviert und der Faserstrang 1 festgeklemmt. Der Faserstrang 1 befindet sich vor dem stillstehenden Formträger 2 zwischen den beiden Schneidelementen 13, 14. In dieser Schneidposition wird die oberhalb der Schneideinrichtung 11 erkennbare Greifrolle 9 mittels ihres Schwenkarmes 8 gegen den Formträger 2 bzw. gegen den auf dem Formträger 2 aufgewickelten Faserstrang 1 gedrückt. Jetzt fahren die beiden Schneidelemente 13 und 14 zur Durchtrennung des Faserstranges 1 zusammen (Fig. 10). In Fig. 10 ist der bereits durchgetrennte Faserstrang 1 gezeigt bzw. das an dem Formträger 2 verbleibende Faserstrangende 15. Die Manipuliervorrichtung 3 bleibt dann zunächst in der Schneidposition ohne weitere Drehung stehen, während der Formträger 2 in Richtung des in Fig. 10 dargestellten Pfeiles rotiert. Dabei rollt die über der Schneideinrichtung 11 angeordnete Greifrolle 9 über das am Formträger 2 verbleibende Faserstrangende 15, sodass dieses an den Formträger 2 angedrückt bzw. angerollt wird. Auf diese Weise wird das noch heiße Faserstrangende 15 bzw. das noch mit schmelzflüssigem thermoplastischem Kunststoff überzogene/getränkte Faserstrangende 15 funktionssicher formschlüssig an den Formträger 2 bzw. an den auf dem Formträger 2 aufgewickelten Faserstrang 1 angedrückt. Es liegt im Rahmen der Erfindung, dass der Formträger 2 in dieser Schneidposition der Manipuliervorrichtung 3 zumindest eine halbe Umdrehung vollzieht, sodass zweckmäßigerweise auch die zweite Greifrolle 9 über das Faserstrangende 15 fährt und dieses ebenfalls an den Formträger 2 andrückt. Fig. 11 zeigt den Zustand, in dem die erste über der Schneideinrichtung 11 angeordnete Greifrolle 9 gerade über das Faserstrangende 15 gefahren ist und dieses wie beschrieben an den Formträger 2 angedrückt hat.

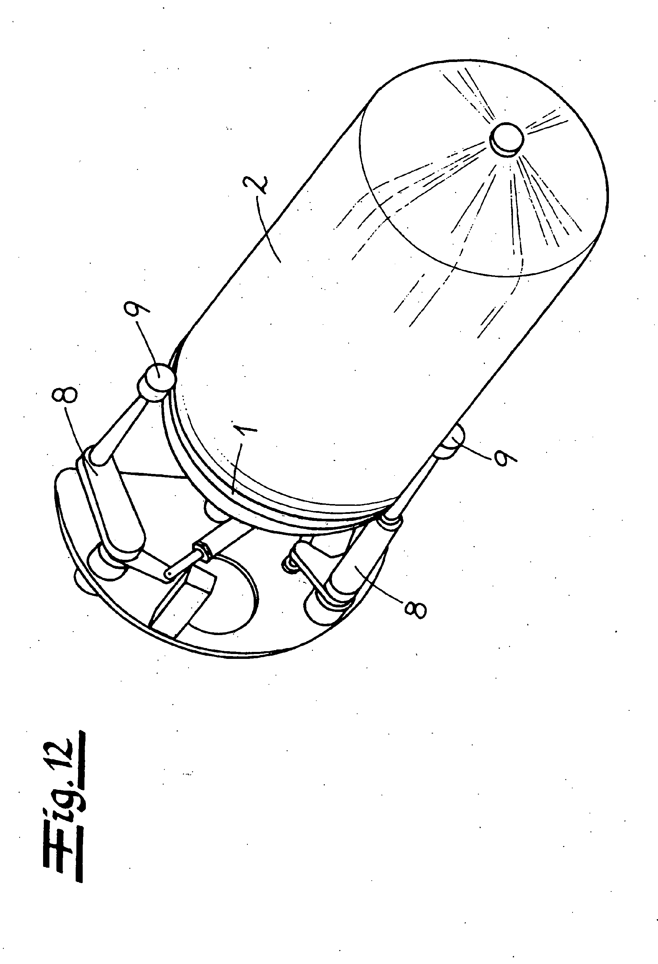

Im Anschluss an dieses Andrücken des Faserstrangendes 15 dreht die Manipuliervorrichtung 3 wieder in eine Parkposition, in der die Greifrollen 9 mit Hilfe der Schwenkarme 8 außer Kontakt mit dem Formträger 2 bzw. mit dem auf dem Formträger 2 aufgewickelten Faserstrang 1 gebracht werden. Diese Parkposition ist in der Fig. 12 dargestellt. Bei Erreichen dieser Parkposition stoppt zweckmäßigerweise auch die Drehung des Formträgers 2. Das Aggregat 7 aus Verlegeeinrichtung 5 und Klemmeinrichtung 6 wird zweckmäßigerweise nach dem Durchtrennen des Faserstranges 1 und vorzugsweise bereits während des Andrückens des Faserstrangendes 15 zu dem zweiten in Fig. 1 rechten Formträger 2 verschwenkt, an dem dann der Anwickelvorgang stattfindet und zwar an dem der Manipuliervorrichtung 3 zugeordneten Stirnende des Formträgers 2. Daraufhin findet das Aufwickeln an diesem zweiten Formträger 2 statt. Während des Aufwickelns des zweiten rechten Formträgers 2 wird der soeben bewickelte erste in der Fig. 1 linke Formträger 2 gegen einen neuen unbewickelten Formträger 2 ausgetauscht und so weiter fort.

## Patentansprüche

1. Vorrichtung zum Aufwickeln eines Faserstranges (1) auf zumindest einen Formträger (2), wobei der Formträger (2) beim Aufwickeln des Faserstranges (1) um seine Längsachse L rotierbar ist
wobei an dem Formträger (2) eine Manipuliervorrichtung (3) vorgesehen ist, welche Manipuliervorrichtung (3) um die Längsachse L des Formträgers (2) drehbar ist,
wobei die Manipuliervorrichtung (3) zu Beginn eines Wickelvorgangs in eine Anwickelposition drehbar ist, in der ein zugeführtes Faserstrangende (10) mit Hilfe der Manipuliervorrichtung (3) an den Formträger (2) anwickelbar ist
und wobei die Manipuliervorrichtung (3) bei Beendigung eines Wickelvorgangs in eine Schneidposition drehbar ist, in der der Faserstrang (1) mit einer Schneideinrichtung (11) durchtrennbar ist.

2. Vorrichtung nach Anspruch 1, wobei die Vorrichtung zum Aufwickeln eines Faserstranges (1) aus mit schmelzflüssigem thermoplastischem Kunststoff getränkten bzw. überzogenen Fasern vorgesehen ist.

3. Vorrichtung nach einem der Ansprüche 1 oder 2, wobei eine in Förderrichtung des Faserstranges (1) vor dem Formträger (2) angeordnete Heizvorrichtung zum Aufschmelzen des Kunststoffes vorgesehen ist.

4. Vorrichtung nach einem der Ansprüche 1 bis 3, wobei eine Verlegeeinrichtung (5) vorgesehen ist, mit der der Faserstrang (1) an den Formträger (3) heranführbar bzw. dem Formträger (2) zuführbar ist.

5. Vorrichtung nach einem der Ansprüche 1 bis 4, wobei die Manipuliervorrichtung (3) eine Greifrolle (9) aufweist, mit der das Faserstrangende (10) in der Anwickelposition an den Formträger (2) drückbar ist.

6. Vorrichtung nach einem der Ansprüche 1 bis 5, wobei der Formträger (2) und die Manipuliervorrichtung (3) beim Anwickelvorgang synchron drehbar sind und die Greifrolle (9) dabei das Faserstrangende (10) an den Formträger (2) drückt.

7. Vorrichtung nach einem der Ansprüche 1 bis 6, wobei eine Parkposition der Manipuliervorrichtung (3) vorgesehen ist, in die die Manipuliervorrichtung (3) nach dem Anwickelvorgang überführbar ist und in der die Greifrolle (9) außer Kontakt mit dem Faserstrangende (10) bzw. mit dem Formträger (2) ist.

8. Vorrichtung nach einem der Ansprüche 1 bis 7, wobei die Manipuliervorrichtung (3) bei Beendigung des Wickelvorgangs aus der Parkposition in die Schneidposition drehbar ist und der Faserstrang (1) in dieser Schneidposition mit der Schneideinrichtung (11) durchtrennbar ist.

9. Vorrichtung nach einem der Ansprüche 1 bis 8, wobei das nach dem Durchtrennen des Faserstranges (1) auf dem Formträger verbleibende Faserstrangende (15) mit einer Greifrolle (9) an den Formträger (2) anrollbar bzw. andrückbar ist.

10. Vorrichtung nach einem der Ansprüche 1 bis 9, wobei die Vorrichtung zur gleichzeitigen Aufnahme von zumindest zwei Formträgern (2) eingerichtet ist und wobei jedem der beiden Formträger (2) eine Manipuliervorrichtung (3) zugeordnet ist, wobei die Vorrichtung mit der Maßgabe eingerichtet ist, dass zuerst der erste Formträger (2) und anschließend der zweite Formträger (2) mit dem Faserstrang (1) bewickelbar ist und dass ein fertig bewickelter Formträger (2) gegen einen unbewickelten Formträger (2) austauschbar ist.

11. Vorrichtung nach einem der Ansprüche 1 bis 10, wobei die beiden Formträger (2) mit ihren ersten Stirnenden einander gegenüberliegend angeordnet sind und wobei die Manipuliervorrichtung jeweils an dem zweiten Stirnende des Formträgers (2) angeordnet ist.

12. Verfahren zum Betrieb einer Vorrichtung nach einem der Ansprüche 1 bis 11, wobei der Faserstrang (1) mit der Verlegeeinrichtung (5) zunächst dem ersten Formträger (2) zugeführt und auf den ersten Formträger (2) aufgewickelt wird,
wobei bei Beendigung des Wickelvorgangs auf den ersten Formträger (2) der Faserstrang (1) durchtrennt wird und die Verlegeeinrichtung (5) anschließend mit dem von ihr aufgenommenen Faserstrangende (10) zu dem zweiten Formträger (2) verschwenkt wird und der Faserstrang (1) anschließend auf dem zweiten Formträger (2) aufgewickelt wird, während der erste fertig bewickelte Formträger (2) gegen einen unbewickelten Formträger (2) ausgetauscht wird
und wobei bei Beendigung des Wickelvorgangs auf den zweiten Formträger (2) der Faserstrang (1) durchtrennt wird und die Verlegeeinrichtung (5) anschließend mit dem von ihr aufgenommenen Faserstrang (1) zu dem unbewinkelten Formträger (2) zurückgeschwenkt wird und so weiter fort.

13. Verfahren nach Anspruch 12, wobei der Faserstrang (1) beim Verschwenken der Verlegeeinrichtung (5) von dem einen zum anderen Formträger (2) in einer Klemmeinrichtung (6) festgeklemmt wird, sodass der Faserstrang gegen ein Verrutschen gesichert ist und eine kontinuierliche Faserstrangzufuhr während der Schwenkbewegung der Verlegeeinrichtung (5) unterbrochen ist.

## Claims

1. A device for winding a fibre strand (1) onto at least one formed carrier (2), wherein the formed carrier (2) is rotatable about its longitudinal axis L while the fibre strand (1) is wound thereon, a manipulating device (3) that is rotatable about the longitudinal axis L of the formed carrier (2) is provided on the formed carrier (2), the manipulating device (3) is rotatable to a winding-initiation position, at which the end (10) of a fibre strand fed to it may be wound onto the formed carrier (2) using the manipulating device (3) at the start of winding operations, and the manipulating device (3) may be rotated to a cut-off position, at which the fibre strand (1) may be cut by a cutting device (11).

2. A device according the claim 1, wherein the device is provided for the purpose of winding a fibre strand (1) composed of fibres impregnated or coated with a fusible thermoplastic.

3. A device according to claim 1 or claim 2, wherein a heating device for melting the plastic is arranged prior to, referred to the direction of transport of the fibre strand (1), the formed carrier (2).

4. A device according to any of claims 1 - 3, wherein a laying device (5), with which the fibre strand (1) may be transported to the formed carrier (2), or fed to the formed carrier (2), is provided.

5. A device according to any of claims 1 - 4, wherein the manipulating device (3) has a gripping roller (9), with which the end (10) of the fibre strand may be pressed against the formed carrier (2) at the winding-initiation position.

6. A device according to any of claims 1 - 5, wherein the formed carrier (2) and the manipulating device (3) are rotatable in synchronism during winding operations and the gripping roller (9) simultaneously presses the end (10) of the fibre strand against the formed carrier (2).

7. A device according to any of claims 1 - 6, wherein a parking position for the manipulating device (3), to which the manipulating device (3) may be transferred following winding operations and at which the gripping roller (9) will be in contact with neither the end (10) of the fibre strand nor the formed carrier (2), is provided.

8. A device according to any of claims 1 - 7, wherein the manipulating device (3) may be rotated from the parking position to the cutting position upon termination of winding operations and the fibre strand (1) may be cut by the cutting device (11) while at the cutting position.

9. A device according to any of claims 1 - 8, wherein the end (15) of the fibre strand remaining on the formed carrier (2) after the fibre strand (1) has been cut may be rolled onto, or pressed onto, the formed carrier (2) by a gripping roller (9).

10. A device according to any of claims 1 - 9, wherein the device is set up for simultaneously accommodating at least two formed carriers (2), a manipulating device (3) is assigned to each of the two formed carriers (2), the device is set up such that the fibre strand (1) may be initially wound onto the first formed carrier (2) and subsequently wound onto the second formed carrier (2), and finish-wound formed carriers (2) may be replaced by empty formed carriers (2).

11. A device according to any of claims 1 -10, wherein the pair of formed carriers (2) are arranged end to end and their associated manipulating device is arranged on their far end.

12. A method for operating a device according to any of claims 1 -11, wherein the fibre strand (1) is initially fed to the first formed carrier (2) by the laying device (5) and wound onto the first formed carrier (2), the fibre strand (1) is cut once the first formed carrier (2) has been wound, the laying device (5) and the end (10) of the fibre strand captured by it are then transferred to the second formed carrier (2), the fibre strand (1) is then wound onto the second formed carrier (2) while the first, finish-wound formed carrier (2) is replaced by an empty formed carrier (2), the fibre strand (1) is cut once the second formed carrier (2) has been wound, the laying device (5) is then returned to the empty formed carrier (2), etc.

13. A method according to claim 12, wherein the fibre strand (1) is firmly clamped in a clamping device (6) while the laying device (5) is transferred from one formed carrier (2) to the other in order that the fibre strand will be prevented from slipping out and continuous feeding of the fibre strand will occur while lateral motions of the laying device (5) are interrupted.

## Revendications

1. Dispositif d'enroulement d'un fil de fibre (1) sur au moins un support de formage (1), le support de formage (2), lors de l'enroulement du fil de fibre (1), étant rotatif autour de son axe longitudinal L,
un dispositif de manipulation (3) étant ménagé sur le support de formage (2), lequel dispositif de manipulation (3) est rotatif autour de l'axe longitudinal L du support de formage (2),
le dispositif de manipulation (3), au début de l'opération d'enroulement, pouvant être tourné dans une position d'enroulement, dans laquelle un bout de fil de fibre (1) amené est enroulable sur le support de formage (2) à l'aide du dispositif de manipulation (3),
et le dispositif de manipulation (3), à l'achèvement de l'opération d'enroulement, pouvant être tourné dans une position de coupe, dans laquelle le fil de fibre (1) peut être coupé à l'aide d'un dispositif de coupe (11).

2. Dispositif selon la revendication 1, le dispositif étant ménagé pour l'enroulement d'un fil de fibre (1) constitué de fibres revêtues ou imprégnées de plastique thermoplastique en fusion.

3. Dispositif selon l'une quelconque des revendications 1 ou 2, un dispositif de chauffage disposé devant le support de formage (2) dans le sens de transport du fil de fibre (1) étant ménagé pour faire fondre le plastique.

4. Dispositif selon l'une quelconque des revendications 1 à 3, un dispositif de déplacement (5) étant ménagé, à l'aide duquel le fil de fibre (1) peut être approché du support de formage (2) ou amené au support de formage (2).

5. Dispositif selon l'une quelconque des revendications 1 à 4, le dispositif de manipulation (3) présentant un rouleau de prise (9), à l'aide duquel le bout du fil de fibre (10) peut être pressé dans la position d'enroulement sur le support de formage (2).

6. Dispositif selon l'une quelconque des revendications 1 à 5, le support de formage (2) et le dispositif de manipulation (3) pouvant être tournés de manière synchrone lors de l'opération d'enroulement et le rouleau de prise (9) pressant en même temps le bout du fil de fibre (10) sur le support de formage (2).

7. Dispositif selon l'une quelconque des revendications 1 à 6, une position de stationnement du dispositif de manipulation (3) étant ménagée, dans laquelle le dispositif de manipulation (3) peut être transféré après l'opération d'enroulement et dans laquelle le rouleau de prise (9) est hors de contact avec le bout de fil de fibre (10) ou avec le support de formage (2).

8. Dispositif selon l'une quelconque des revendications 1 à 7, le dispositif de manipulation (3), à la fin de l'opération d'enroulement, pouvant être tourné hors de la position de stationnement en position de coupe et le fil de fibre (1), dans cette position de coupe, pouvant être coupé à l'aide du dispositif de coupe (11).

9. Dispositif selon l'une quelconque des revendications 1 à 8, le bout du fil de fibre (15) restant sur le support de formage après la coupe du fil de fibre (1) pouvant être enroulé ou pressé sur le support de formage (2) à l'aide d'un rouleau de prise (9).

10. Dispositif selon l'une quelconque des revendications 1 à 9, le dispositif étant adapté pour le logement simultané d'au moins deux supports de formage (2) et un dispositif de manipulation (3) étant attribué à chacun des deux supports de formage (2), le dispositif étant aménagé de manière à ce que d'abord le premier support de formage (2) et ensuite le second support de formage (2) puissent être embobinés avec le fil de fibre (1) et qu'un support de formage complètement embobiné (2) soit remplaçable par un support de formage (2) non embobiné.

11. Dispositif selon l'une quelconque des revendications 1 à 10, les deux supports de formage (2) étant disposés l'un en face de l'autre avec leurs premières extrémités frontales et le dispositif de manipulation étant disposé respectivement sur la seconde extrémité frontale du support de formage (2).

12. Procédé destiné au fonctionnement d'un dispositif selon l'une quelconque des revendications 1 à 11, le fil de fibre (1) étant d'abord amené au premier support de formage (2) à l'aide du dispositif de déplacement (5) et étant enroulé sur le premier support de formage (2),
le fil de fibre (1) étant coupé à l'achèvement de l'opération d'enroulement sur le premier support de formage (2) et le dispositif de déplacement (5) étant ensuite pivoté vers le second support de formage (2), avec le bout du fil de fibre (10) pris par lui, et le fil de fibre (1) étant ensuite enroulé sur le second support de formage (2) pendant que le premier support de formage (2) complètement embobiné est remplacé par un support de formage (2) non embobiné
et le fil de fibre (1) étant coupé à l'achèvement de l'opération d'enroulement sur le second support de formage (2) et le dispositif de déplacement (5) étant ensuite pivoté en arrière vers le support de formage (2) non embobiné, avec le bout du fil de fibre (10) pris par lui, et ainsi de suite.

13. Procédé selon la revendication 12, le fil de fibre (1), lors du pivotement du dispositif de déplacement (5), étant fixé d'un support de formage vers l'autre (2) dans un dispositif de blocage (6), de sorte que le fil de fibre est bloqué contre un glissement et qu'une alimentation continue du fil de fibre est interrompue pendant le mouvement de pivotement du dispositif de déplacement (5).
